# EUROPÄISCHE PATENTANMELDUNG

(11) **EP 4 098 435 A1**
(43) Veröffentlichungstag der Anmeldung: **07.12.2022**
(21) Anmeldenummer: 22172685.4
(22) Anmeldetag: 11.05.2022
(51) Int. Cl.: B32B 3/04, B32B 7/12, B32B 27/08, B32B 27/16, B32B 27/20, B32B 27/26, B32B 27/28, B32B 27/30, B32B 27/32, B32B 27/40

(54) **FOLIENVERBUND, FOLIENVERPACKUNG SOWIE VERFAHREN ZUR HERSTELLUNG EINES FOLIENVERBUNDES**

(30) Priorität: 01.06.2021 DE 102021114174
(71) Anmelder: Mondi AG, 1030 Wien (AT)
(72) Erfinder: Hagemann, Andreas, 48599 Gronau (DE); Elling, Helga, 48565 Steinfurt (DE); Neumann, Andreas, 33790 Halle (DE)
(74) Vertreter: Andrejewski - Honke Patent- und Rechtsanwälte Partnerschaft mbB

(57) **Zusammenfassung**

Die Erfindung betrifft einen Folienverbund für Folienverpackungen (1) mit einer Deckfolie (2) aus einem Polyolefin und einer Barriereschicht (5), wobei die Deckfolie (2) auf einer der Barriereschicht (5) zugewandten Seite zumindest teilweise eine Bedruckung (3) aufweist. Erfindungsgemäß ist eine Ausgleichsschicht (4) zwischen der Deckfolie (2) und der Barriereschicht (5) angeordnet, welche zumindest teilweise an die Bedruckung (3) angrenzt, wobei die Ausgleichsschicht (4) aus einem ausgehärteten Material auf Basis von Polyurethan gebildet ist.

## Beschreibung

Die vorliegende Erfindung betrifft einen Folienverbund für Folienverpackungen, insbesondere für flexible Folienverpackungen mit einer Deckfolie aus einem Polyolefin und einer Barriereschicht, wobei die Deckfolie auf einer der Barriereschicht zugewandten Seite zumindest teilweise eine Bedruckung aufweist.

Vor allem im Bereich Lebensmittelindustrie ist es stets ein Bestreben, verpackte Güter gegenüber Einflüssen weitestgehend abzuschotten, um die Eigenschaften des verpackten Gutes über einen langen Zeitraum aufrechterhalten zu können. Hierzu werden üblicherweise Barriereschichten in dem Verpackungsmaterial eingebunden, die das Eindringen von Sauerstoff oder Luftfeuchtigkeit verringern sollen, wodurch die Haltbarkeit des verpackten Gutes wesentlich erhöht werden kann. Zugleich kann mit Hilfe derartiger Barriereschichten auch eine sogenannte Fettbarriere erreicht werden, durch die verhindert wird, dass das in dem verpackten Gut enthaltene Fett durch die Verpackung migriert und zu einem Austrocknen des entsprechenden Verpackungsgutes führt. Die Migration von Fett kann darüber hinaus auch zu einer Beeinträchtigung der optischen Qualität der Verpackung führen.

Aus dem Stand der Technik sind daher unterschiedliche Ansätze bekannt, um eine solche Barriereschicht zu realisieren, wozu beispielsweise Folien mit einer Schicht aus Aluminiumoxid und/oder Siliciumoxid beschichtet werden. Eine solche Beschichtung verhindert zwar wirksam die Migration von Fett, allerdings ist eine solche Ausgestaltung vergleichsweise teuer und eignet sich nur für bestimmte Arten von Verpackungsgütern, da durch die extrem hohe Steifigkeit der Beschichtungsstoffe nur ein geringes Maß an Knickbruchbeständigkeit gegeben ist. Durch diese geringe Knickbruchbeständigkeit ist es daher möglich, dass die Fettbarriere an bestimmten Stellen der Verpackung frühzeitig nachgibt bzw. vollständig zusammenbricht.

Darüber hinaus werden derartige Folienverbünde üblicherweise in vorgefertigter bzw. in einer bereits beschichteten Form angeboten, sodass eine Bedruckung auf dem fertigen Folienverbund zu erfolgen hat. Abhängig vom Farbsystem können sich hierbei Probleme mit der Farbhaftung ergeben. Darüber hinaus kann die Beschichtung aber auch den Druck selbst nicht schützen. Wenn daher Fett aus der Verpackung nach außen migrieren kann, so werden auch die Farbschichten des Druckes mit Fett kontaminiert. Dies führt zu optisch nachteiligen Effekten oder gar zu einer Delamination der einzelnen Verbundschichten.

Alternativ ist es auch bekannt, Ethylen-Vinyl-Alkohol-Copolymer (EVOH) als Barriereschicht einzusetzen, wobei EVOH allerdings nicht kompatibel zu den gängigen Polyolefinen ist. Vor diesem Hintergrund werden zusätzliche Haftvermittler-Schichten benötigt, die eine Koextrusion mit der Schicht aus Ethylen-Vinyl-Alkohol-Copolymer ermöglichen. Allerdings benötigen EVOH-Koextrusionsstrukturen stets ein gewisses Mindestmaß an Schichtdicke, die nicht unterschritten werden kann.

Aus dem Stand der Technik ist es ferner bekannt, Polyvinylalkohol (PVOH) als Barriereschicht einzusetzen, wobei die daraus gebildete Barriereschicht gegenüber Aluminiumoxid- bzw. Siliciumoxidschichten eine wesentlich höhere Knickbeständigkeit aufweist. Darüber hinaus kann eine solche Beschichtung auch in vorteilhafter Weise nachträglich auf einer bedruckten Deckfolie aufgebracht werden, sodass auch ein wirksamer Schutz der Bedruckung möglich ist.

Eine entsprechende Ausgestaltung ist beispielsweise aus der EP 0 951 390 B1 bekannt, bei der zunächst eine Folie aus einem biaxial orientierten Polyethylenterephthalat (PET) zunächst bedruckt und anschließend mit Polyvinylalkohol beschichtet wird. Zusätzlich ist darüber hinaus eine metallisierte Schicht vorgesehen, durch die die Barriereeigenschaft zusätzlich erhöht werden soll. Eine solche Ausgestaltung ist jedoch entsprechend teuer und aufwendig in der Herstellung, sodass üblicherweise auf die metallisierte Schicht verzichtet wird.

Die EP 2 583 834 B1 lehrt eine Ausgestaltung, bei der auf einem Substrat aus einem biaxial orientierten Polypropylen ausschließlich eine modifizierte Lösung auf Basis von Polyvinylalkohol aufgebracht wird, welche dann die eigentliche Barriereschicht bildet. Für eine bessere Haftbedingung kann in diesem Zusammenhang ein Haftvermittler auf Basis von Polyurethan dienen, auf welchen dann die eigentliche Barriereschicht aufgebracht wird. Der so gebildete Folienverbund kann dann anschließend bedruckt und weiterverarbeitet werden.

Die aus dem Stand der Technik bekannten Lösungen haben sich grundsätzlich bewährt. Allerdings ist es heutzutage ein großes Bestreben, Verpackungen bzw. Verpackungsmaterialien möglichst sortenrein herzustellen, um ein hohes Maß an Recyclierbarkeit zu gewährleisten. So können beispielsweise Folienverbünde, welche aus nur einem Material, z. B. aus einem Polyolefin, gebildet sind und nur einen geringen Anteil an Fremdpolymeren aufweisen, ohne vorherige Trennung nahezu vollständig recycliert werden. Folglich sollten daher die Barriereschichten möglichst dünn ausgeführt werden, da diese insbesondere gegenüber der Deckfolie aus Polyolefin aus einem Fremdpolymer hergestellt sind.

Gerade die rückseitige Bedruckung der Deckfolie führt jedoch dazu, dass die Barriereschicht aus Polyvinylalkohol auf einer Fläche aufgebracht werden muss, welche insbesondere durch die Bedruckung eine unebene Oberfläche bildet, wobei die geringe Dicke der Schicht aus Polyvinylalkohol nicht ausreichend ist, um die Bedruckung und die Deckfolie vollständig zu umschließen. Nur so kann aber eine vollständige und kontinuierliche Barrierewirkung erzielt werden.

Vor diesem Hintergrund liegt der vorliegenden Erfindung die Aufgabe zugrunde, eine Folienanordnung anzugeben, welche einerseits kostengünstig mit einem hochwertigen optischen Erscheinungsbild hergestellt werden kann und zugleich mit nur einem geringen Anteil von Fremdpolymeren ausgebildet ist.

Diese Aufgabe wird gelöst durch einen Folienverbund gemäß Patentanspruch 1, eine Folienverpackung gemäß Patentanspruch 18 sowie ein Verfahren zur Herstellung eines Folienverbundes gemäß Patentanspruch 19.

Dementsprechend ist eine Ausgleichsschicht zwischen der Deckfolie und der Barriereschicht angeordnet, welche zumindest teilweise an die Bedruckung angrenzt, wobei die Ausgleichsschicht aus einem ausgehärteten Material auf Basis von Polyurethan (PU) gebildet ist. Grundsätzlich kann ein aliphatisches oder ein aromatisches Polyurethan verwendet werden. Bei einem aliphatischen Polyurethan handelt es sich um ein Polyurethan, welches im Gegensatz zu aromatischen Polyurethanen keine in aromatischen Ringstrukturen angeordnete Karbonatome enthalten.

Im Rahmen der Erfindung meint auf Basis von Polyurethan, dass die Ausgleichsschicht Polyurethan zumindest zu einem Bestandteil von 50 Gew.-%, bevorzugt von zumindest 80 Gew.-% und besonders bevorzugt von zumindest 90 Gew.-% enthält.

Gemäß einer bevorzugten Ausgestaltung der Erfindung ist die Barriereschicht auf Basis von Polyvinylalkohol (PVOH) gebildet. Auch hier ist die Barriereschicht dann vorzugsweise aus Polyvinylalkohol gebildet und besteht demnach zumindest zu 50 Gew.-%, besonders bevorzugt zumindest 80 Gew.-%, besonders bevorzugt zumindest 90 Gew.-% aus Polyvinylalkohol.

Alternativ kann es auch vorgesehen sein, dass die Barriereschicht auf Basis eines wässrigen, acrylatisch-basierten Materials gebildet ist. Ausgehend von einer solchen Ausgestaltung besteht die Barriereschicht demnach zumindest zu 50 Gew.-%, besonders bevorzugt zumindest 80 Gew.-%, besonders bevorzugt zumindest 90 Gew.-% aus diesem Material.

In diesem Zusammenhang beziehen sich die entsprechenden Angaben sowohl für die Barriereschicht als auch für die Ausgleichsschicht auf einen ausgehärteten Zustand, da die Barriereschicht üblicherweise in Form einer Lösung bestehend aus Lösemittel und Feststoffanteil aufgebracht wird.

Dementsprechend ist eine Ausgleichsschicht zwischen der Deckfolie und der Barriereschicht angeordnet, welche zumindest teilweise an die Bedruckung angrenzt, wobei die Ausgleichsschicht aus einem ausgehärteten Material auf Basis von Polyurethan gebildet ist. Hierbei ermöglicht es die Ausgleichsschicht, die insbesondere von der Bedruckung hervorgerufenen Unebenheiten derart auszugleichen, dass trotz Aufbringen einer vergleichsweise dünnen Barriereschicht aus Polyvinylalkohol, einerseits eine vollständige und durchgängige Barriereschicht ermöglicht wird, ohne dass sich der Anteil an Fremdpolymeren wesentlich erhöht. Zugleich wird durch die Anordnung der Barriereschicht die Bedruckung bzw. die Druckfarbe gegen etwaiges Fett aus dem Verpackungsinhalt geschützt, sodass sichergestellt wird, dass das optische Erscheinungsbild über einen langen Zeitraum erhalten bleiben kann.

Sowohl die Barriereschicht als auch die Ausgleichsschicht können in diesem Fall vergleichsweise dünn gehalten werden, wobei die Barriereschicht und/oder die Ausgleichsschicht ein Flächengewicht zwischen 0,5 g/m² und 2,5 g/m², bevorzugt zwischen 0,7 g/m² und 1,5 g/m² aufweisen.

Gemäß einer bevorzugten Ausgestaltung der Erfindung schließt die Barriereschicht unmittelbar an die Ausgleichsschicht an, sodass entsprechend keine weiteren Schichten oder Folien zwischen der Barriereschicht und der Ausgleichsschicht angeordnet sind. Alternativ ist es vorgesehen, dass zwischen der Ausgleichsschicht und der Barriereschicht eine Haftvermittlerschicht angeordnet ist. Hierdurch kann die Haftwirkung zwischen den beiden Schichten zusätzlich erhöht werden. Besonders geeignet sind in diesem Zusammenhang Acrylatlacke oder Nitrocelluloselacke, welche auf die Barriereschicht aufgebracht werden und dann in einem ausgehärteten Zustand vorliegen.

Bei dem ausgehärteten Material handelt es sich bevorzugt um einen Polyurethanlack, wobei ein Lack im Rahmen der Erfindung vorzugsweise einen flüssigen Beschichtungsstoff meint, der dünn aufgetragen wird und durch chemische oder physikalische Vorgänge zu einem durchgehenden, festen Film aufgebaut wird. Besonders bevorzugt handelt es sich um einen 2-Komponenten-Polyurethanlack, welcher aus zwei zusammengehörenden Bestandteilen besteht, die getrennt voneinander bereitgestellt werden und erst unmittelbar vor der Verarbeitung miteinander gemischt werden. Hierbei handelt es sich einerseits um den sogenannten Stammlack und andererseits um einen sogenannten Härter, wobei zwischen den Komponenten eine chemische Reaktion stattfindet, welche zur Aushärtung der Schichten führt. Vor diesem Hintergrund werden derartige Lacke auch als Reaktionslacke bezeichnet.

Durch die geringen Mengen an Polyvinylalkohol und Polyurethan ist es möglich, einen nahezu sortenreinen Folienverbund zu schaffen, bei dem der Anteil von Polyolefin bezogen auf den gesamten Folienverbund mehr als 90 Gew.-%, bevorzugt mehr als 92 Gew.-%, besonders bevorzugt mehr als 95 Gew.-%, beträgt. Entsprechend beträgt der Anteil von nicht-polyolefinischen Stoffen bevorzugt weniger als 10 Gew.-%, bevorzugt weniger als 8 Gew.-%, besonders bevorzugt weniger als 5 Gew.-%. Neben der Ausgleichsschicht und der Barriereschicht stellt diesbezüglich auch die Bedruckung ein nichtpolyolefinisches Material dar, wobei das Flächengewicht der Bedruckung bevorzugt zwischen 1 g/m² und 3 g/m² beträgt. Die Bedruckung muss darüber hinaus auch nicht vollflächig auf der Deckfolie angeordnet sein. Entsprechend kann auch der Anteil der Druckfarbe für die Bedruckung vergleichsweise gering gehalten werden.

Bevorzugt ist darüber hinaus eine Ausgestaltung, bei der der Folienverbund - ausschließlich der Bedruckung - vollständig aus Kunststoff gebildet ist. Entsprechend sind also keine Schichten aus Aluminiumoxid oder Siliciumoxid sowie keine Metallisierungen vorgesehen.

Die Barriereeigenschaft des Folienverbundes kann darüber hinaus auch verbessert werden, indem Feststoffpartikel in der Ausgleichsschicht angeordnet sind. Hierdurch wird der Vorteil ausgenutzt, dass Fett durch die Feststoffpartikel selbst nicht oder nur schwer migrieren kann, wobei zusätzlich die Feststoffpartikel in der Ausgleichsschicht das Polyurethan derart verdrängen, dass sich kleine Kanäle zwischen den einzelnen Partikeln ausbilden, durch welche das Fett deutlich schwieriger migrieren kann als durch eine Ausgleichsschicht, welche ausschließlich aus Polyurethan besteht.

Grundsätzlich kann bereits allein durch die Zugabe von Feststoffpartikeln eine zusätzliche Barrierewirkung erzielt werden, wobei der Anteil der Feststoffpartikel in der Ausgleichsschicht aber bevorzugt zwischen 5 und 50 Vol.-% beträgt.

Bevorzugt weisen die Feststoffpartikel darüber hinaus einen mittleren Durchmesser zwischen 150 nm und 800 nm, bevorzugt zwischen 250 nm und 650 nm, auf. Bei einem solchen Durchmesser ist es einerseits möglich, die durch die Bedruckung hervorgerufenen Unebenheiten zumindest teilweise auszugleichen und andererseits eine wirksame Barrierewirkung zu erzielen.

Gemäß einer bevorzugten Ausgestaltung der Erfindung handelt es sich bei den Feststoffpartikeln zumindest teilweise um Titandioxidpartikel (TiO₂). Hierbei ist zu beachten, dass Pulver bestehend aus einer Vielzahl von Partikeln üblicherweise einen gewissen Verunreinigungsanteil aufweisen, wobei aber der Anteil von Titandioxid an den Feststoffpartikeln bevorzugt mehr als 90 Gew.-%, besonders bevorzugt mehr als 95 Gew.-%, beträgt. Die Verwendung von Titandioxidpartikeln in Folienverbünden ist grundsätzlich bekannt, wobei durch die weiße Farbgebung der Partikel einerseits ein hochwertiges Erscheinungsbild realisierbar ist und sich zugleich die rückseitige Bedruckung der Deckfolie besser gegenüber den nicht bedruckten Bereichen abheben kann. Dadurch, dass die Ausgleichsschicht unmittelbar an die Bedruckung anschließt, wird folglich durch die Verwendung von Titandioxidpartikeln neben der Ausgleichs- und der Barrierewirkung auch das optische Erscheinungsbild im positiven Sinne beeinflusst.

Unabhängig von der Verwendung von Feststoffpartikeln ist es gemäß einer Ausgestaltungsform der Erfindung vorgesehen, dass sich die Bedruckung nicht vollflächig auf der Deckfolie erstreckt, wobei die Ausgleichsschicht die Bedruckung derart einschließt, dass die Ausgleichsschicht auf der an die Barriereschicht angrenzenden Seite eine im Wesentlichen ebene Fläche bildet. Somit sollen die Unebenheiten der Bedruckung nicht nur kompensiert, sondern vielmehr vollständig ausgeglichen werden, sodass folglich keine durch die Bedruckung implizierten Erhebungen Auswirkungen für die Ausgestaltung der Barriereschicht haben.

Gemäß einer Weiterbildung der Erfindung ist die Barriereschicht aus einer Mischung aus einem hochmolekularen und einem niedermolekularen Polyvinylalkohol gebildet. Hierbei geht die Erfindung von der Erkenntnis aus, dass hochmolekulare Polyvinylalkohole grundsätzlich eine bessere Barrierewirkung aufweisen als niedermolekulare Polyvinylalkohole. Allerdings sind sie auch deutlich schwerer zu verarbeiten, da sie sehr stark und schnell ausgelen. Durch die Hinzugabe von niedermolekularen Polyvinylalkohol wird die Verarbeitbarkeit deutlich erhöht. Eine solche Ausgestaltung ist daher im Rahmen der Erfindung bevorzugt.

Bevorzugt beträgt der Anteil an hochmolekularen Polyvinylalkohol bezogen auf den Gesamtanteil von Polyvinylalkohol in der Barriereschicht zwischen 20 und 50 Gew.-%, besonders bevorzugt zwischen 25 und 45 Gew.-%, und der Anteil an niedermolekularen Polyvinylalkohol zwischen 50 und 80 Gew.-%, besonders bevorzugt zwischen 55 und 75 Gew.-%.

Gemäß einer bevorzugten Ausgestaltung der Erfindung weist die Barriereschicht darüber hinaus einen Anteil von Polyethylenimin (PEI) auf, durch den die Haftwirkung der Barriereschicht wesentlich verbessert werden kann. Insbesondere kann bei einer solchen Ausgestaltung auf eine zusätzliche Haftvermittler-Schicht verzichtet werden.

Bevorzugt beträgt der Anteil an Polyethyleniminen in der Barriereschicht zwischen 0,5 und 1,5 Gew.-%. Grundsätzlich kann durch eine Erhöhung des Anteils die Haftwirkung verbessert werden.

Die Deckfolie weist bevorzugt eine Dicke zwischen 20 µm und 50 µm, besonders bevorzugt zwischen 25 µm und 40 µm auf, und stellt gegenüber den darauf aufgetragenen Schichten sowie der Bedruckung den wesentlichen Materialanteil dar. Wenngleich die Erfindung grundsätzlich nicht auf die Art des verwendeten Polyolefins für die Deckfolie beschränkt ist, so ist die Deckfolie bevorzugt aus einem Polyethylen gebildet, wobei im Rahmen der Erfindung Polyethylen auch alle davon abgeleiteten Arten mitumfasst. Diese Arten umfassen beispielsweise Polyethylen sehr niedriger Dichte (LLDPE), niedriger Dichte (LDPE), mittlerer Dichte (MDPE), hoher Dichte (HDPE) und sehr hoher Dichte (HHDPE). Für die Deckfolie kommt insbesondere ein Polyolefin hoher Dichte zum Einsatz, welches zumindest eine monoaxiale Orientierung aufweist. Bei einem entsprechenden Polyethylen weist die Deckfolie somit beispielsweise bei einer Foliendicke von 30 µm ein Flächengewicht von 28,5 g/m² auf, welches somit deutlich über den Flächengewichten der darauf aufgebrachten Schichten liegt.

Gemäß einer Weiterbildung der Erfindung ist die Deckfolie darüber hinaus Corona behandelt. Bei der Corona-Behandlung handelt es sich um ein elektrochemisches Verfahren zu Oberflächenmodifikation von Kunststoffen, um insbesondere die Bedruckbarkeit der Oberfläche zu verbessern. Insbesondere Polyolefine sind nur sehr schlecht durch Druckfarben benetzbar, wodurch das Bedrucken solcher Kunststoffe oder aber auch ihre Weiterverarbeitung durch Kaschieren oder Beschichten nicht bzw. nur schwer möglich ist. Durch die Corona-Behandlung kann die Benetzbarkeit und die chemische Affinität verbessert werden, sodass die Deckfolie aus Polyolefin unmittelbar bedruckt werden kann.

Gemäß einer bevorzugten Ausgestaltung der Erfindung ist die Deckfolie über eine zusätzliche Kaschierschicht mit einer Trägerfolie, insbesondere mit einer mehrschichtigen Trägerfolie, verbunden. Dementsprechend dient die Kaschierschicht der Verbindung zwischen der zuvor beschichteten Deckfolie mit der Trägerfolie. Insbesondere handelt es sich bei der Kaschierschicht um eine Klebstoffschicht, z. B. um einen Klebstoff auf Basis von Polyurethan.

Die Trägerfolie ist bevorzugt ebenfalls aus einem Polyolefin gebildet, wobei es sich insbesondere um dasselbe Polyolefin handelt, welches auch für die Deckschicht vorgesehen ist. Sofern also die Deckschicht beispielsweise aus einem Polyethylen gebildet ist, so ist auch gemäß einer bevorzugten Ausgestaltung der Erfindung die Trägerfolie aus einem Polyethylen gebildet, wobei sich die Polyethylenarten sowohl zwischen der Deckfolie und der Trägerfolie, aber auch innerhalb der Trägerfolie voneinander unterscheiden können. So kann die Trägerfolie nämlich nicht nur einschichtig, sondern auch mehrschichtig ausgebildet sein, wobei die einzelnen Schichten üblicherweise miteinander koextrudiert sind. Insbesondere weist die Trägerfolie zumindest drei Schichten auf, wobei die Materialien der einzelnen Schichten anhand der zu erfüllenden Eigenschaften ausgewählt werden können. So kann beispielsweise die in der fertigen Folienverpackung unmittelbar an den Verpackungsinnenraum angrenzende Schicht der Trägerfolie aus einem niedrigsiedenden Material, z. B. Polyethylen niedriger Dichte, gebildet sein, sodass entsprechend die Verpackung durch Heißsiegeln gebildet bzw. verschlossen werden kann.

Die Dicke der Trägerfolie beträgt unabhängig von der konkreten Ausgestaltung bevorzugt zwischen 100 µm und 170 µm, besonders bevorzugt zwischen 120 µm und 160 µm. Gemäß einer Weiterbildung der Erfindung schließt die Kaschierschicht unmittelbar an die Barriereschicht an.

Gegenstand der Erfindung ist ferner eine Folienverpackung gemäß Anspruch 18 aus einem erfindungsgemäßen Folienverbund, wobei der Folienverbund einen Verpackungsinnenraum derart begrenzt, dass die Deckfolie eine Außenseite bildet. Entsprechend bildet gemäß einer bevorzugten Ausgestaltung die Trägerfolie eine Innenseite, welche unmittelbar an den Verpackungsinnenraum der Folienverpackung angrenzt.

Gegenstand der Erfindung ist darüber hinaus ein Verfahren zur Herstellung eines erfindungsgemäßen Folienverbundes, wobei zunächst eine Deckfolie bereitgestellt wird, die gemäß den zuvor im Zusammenhang mit dem Folienverbund erläuterten Merkmalen ausgestaltet sein kann.

Diese Deckfolie wird auf einer Seite zumindest teilweise bedruckt, wobei anschließend die Deckfolie zur Bildung einer Ausgleichsschicht auf der zumindest teilweise bedruckten Seite mit einem aushärtbaren Material beschichtet wird, welches mindestens einen Anteil an Polyurethan enthält.

Bevorzugt handelt es sich bei dem aushärtbaren Material um einen Polyurethanlack bzw. einen 2-Komponenten-Polyurethanlack, welcher darüber hinaus einen Anteil an Feststoffpartikeln, z. B. Titandioxidpartikeln, enthalten kann.

Nach einer Zwischenlagerung, bei der das Material der Ausgleichsschicht aushärtet, wird nach dem Aushärten die Ausgleichsschicht zur Bildung einer Barriereschicht mit einem Material beschichtet, welches zumindest einen Anteil an Polyvinylalkohol enthält.

Bevorzugt handelt es sich bei dem Material zur Bildung der Barriereschicht um ein flüssiges Lösemittel, bevorzugt ein Lösungsmittel auf Wasserbasis, welches einen Anteil an Polyvinylalkohol in Feststoffform enthält. Der Anteil des Lösemittels beträgt hierbei bevorzugt zwischen 80 und 95 Gew.-%, bevorzugt zwischen 84 und 92 Gew.-%. Der Feststoffanteil beträgt bevorzugt zwischen 5 und 20 Gew.-%, besonders bevorzugt zwischen 8 und 16 Gew.-%. Wenngleich das Lösungsmittel vorzugsweise auf Wasserbasis gebildet ist, kann aber auch ein Anteil an Ethanol vorgesehen sein, der ein zügigeres Aushärten der Barriereschicht ermöglicht. Der Anteil an Ethanol beträgt hierzu bevorzugt zwischen 20 und 40 Gew.-%, besonders bevorzugt zwischen 25 und 35 Gew.-%, wobei dann entsprechend der restliche Anteil des Lösungsmittels auf Wasser entfällt.

Gemäß einer Weiterbildung des erfindungsgemäßen Verfahrens kann das aushärtbare Material der Ausgleichsschicht nach dem Aufbringen geglättet werden, um eine möglichst ebene Oberfläche zu bilden, an die sodann die Barriereschicht angrenzt. Die Glättung kann insbesondere durch einen Rollen-Lagendruck erfolgen.

Bevorzugt kann in einem abschließenden Schritt die Deckfolie bzw. die bedruckte und beschichtete Deckfolie unter Einbindung einer Kaschierschicht mit einer Trägerfolie verbunden werden, wobei die Kaschierschicht der Verbindung zwischen der Deckfolie der Trägerfolie dient.

Im Folgenden wird die Erfindung anhand eines Ausführungsbeispiels näher erläutert. Es zeigen:
- Fig. 1: eine Folienverpackung in Form eines Seitenfaltenbeutels für Tierfutter,
- Fig. 2: eine erfindungsgemäßer Folienverbund zur Bildung der Folienverpackung gemäß Fig. 1.

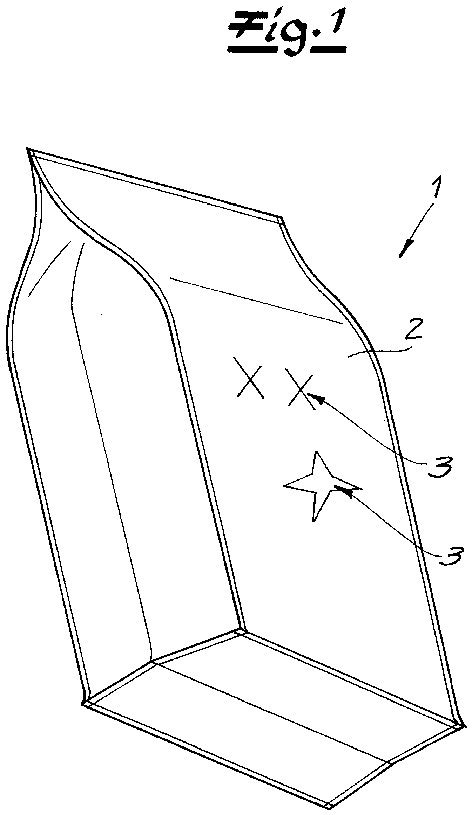

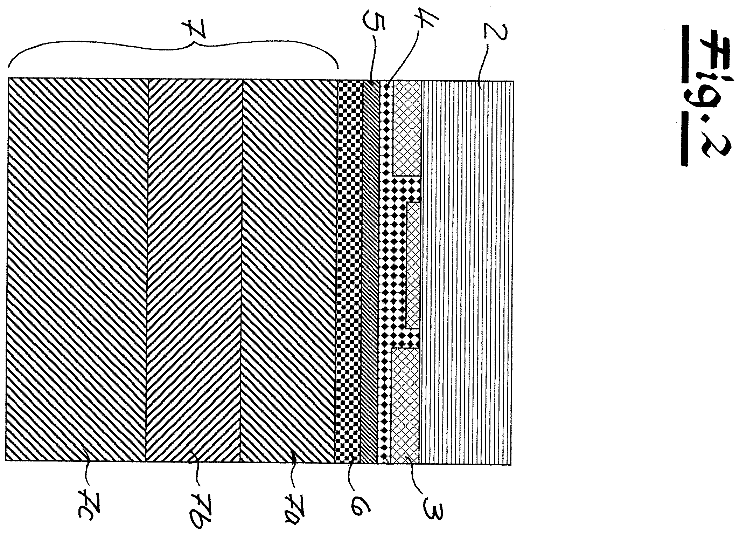

Die Fig. 1 zeigt eine flexible Folienverpackung 1 in Form eines Seitenfaltenbeutels mit zwei Frontwänden und zwei zwischen den Frontwänden angeordneten Seitenfalten. Die Folienverpackung 1 ist aus einem Folienverbund gebildet, wobei eine Deckfolie 2 die Außenseite der Folienverpackung 1 bildet. Von außen sichtbar ist darüber hinaus eine Bedruckung 3, welche auf einer dem Verpackungsinnenraum der Folienverpackung 1 zugewandten Seite der Deckfolie 2 aufgebracht wurde und aufgrund der transparenten Ausgestaltung der Deckfolie 2 sichtbar ist. Die Folienverpackung 1 ist insbesondere dazu geeignet, stückige Verpackungsgüter, insbesondere Tierfutter aufzunehmen, wobei der Folienverbund Barriereeigenschaften aufweist, die insbesondere eine Fettmigration vom Verpackungsinnenraum nach außen hin wirksam verhindert. Diese Barrierewirkung wird durch den in Fig. 2 dargestellten Aufbau des Folienverbundes erzeugt.

Der Aufbau des Folienverbundes ist in der Fig. 2 näher dargestellt, wobei die verwendeten Materialien sowie die Schichtdicken bzw. Flächengewichte der einzelnen Schichten aus der nachfolgenden Tabelle entnommen werden können.

| Schicht | Schichtdicke (Flächengewicht) | Zusammensetzung |
|---|---|---|
| Deckfolie (2) | 30 µm (28,5 g/m²) | HDPE |
| Bedruckung (3) | (2,0 g/m²) | Nitrocelluloselack |
| Ausgleichsschicht (4) | (1,0 g/m²) | Zweikomponenten-PU-Lack + TiO₂-Partikeln |
| Barriereschicht (5) | (1,0 g/m²) | 66 % niedermolekulares PVOH, |
| | | 33 % hochmolekulares PVOH, |
| | | 1 % PEI |
| Kaschierschicht (6) | (2,0 g/m²) | PU-Klebstoff |
| Trägerfolie (7) | 140 µm (129 g/m²) | 40 µm MDPE/LDPE/LLDPE |
| | | 40 µm MDPE/LDPE/LLDPE |
| | | 60 µm LDPE/LLDPE/VLDPE |
| | Gesamt: 164,5 g/m² | |

Bei der Deckfolie 2 handelt es sich um eine orientierte Polyethylenfolie aus einem Polyethylen hoher Dichte (HDPG). Wie bereits zuvor erläutert, weist die Deckfolie 2 eine Bedruckung 3 auf, die allerdings keine vollflächige Beschichtung der Deckfolie 2 darstellt, sondern lediglich in diskreten Abschnitten auf einer Seite der Deckfolie 2 angeordnet ist. Die Bedruckung 3 führt daher zu einer gewissen Unebenheit der Folie 2, welche das Aufbringen einer dünnen Barriereschicht 5 erschwert. Die Barriereschicht 5 ist auf Basis von Polyvinylalkohol (PVOH) gebildet und wird im Zuge der Herstellung in Form eines flüssigen Lösungsmittels aufgebracht. Sie weist im ausgehärteten Zustand ein Flächengewicht von nur 1 g/m² auf. Hierdurch ist diese Barriereschicht 5 nicht dazu geeignet, die Unebenheiten aufgrund der Bedruckung 3 so weit auszugleichen, dass sich eine durchgehende Barriereschicht 5 ausbilden würde. Entsprechend wäre die Barrierewirkung nicht für die gesamte Folienverpackung 1 gegeben.

Aus diesem Grunde ist eine Ausgleichsschicht 4 vorgesehen, die die durch die Bedruckung 3 hervorgerufenen Unebenheiten ausgleicht und den Auftrag einer durchgängigen Barriereschicht 5 ermöglicht.

Bei der Ausgleichsschicht 4 handelt es sich um eine Schicht auf Basis von Polyurethan (PU), welche im Zuge der Herstellung in Form eines 2-Komponenten-Polyurethanlacks auf die Beschichtung 3 bzw. auf die Deckfolie 2 aufgetragen wird. Die Ausgleichsschicht 4 weist darüber hinaus Feststoffpartikel auf, die einerseits zum Ausgleich der Unebenheiten beitragen und den erforderlichen Anteil von Polyurethan verringern und andererseits ebenfalls eine gewisse Barrierewirkung entfalten, da sodann Fett lediglich durch die Zwischenräume zwischen den einzelnen Feststoffpartikel migrieren kann. Wenngleich das Vorhandensein der Feststoffpartikel die Barrierewirkung zusätzlich verbessert, so können die Ausgleichsschichten 4 aber auch allein aus einer aushärtenden Schicht auf Basis von Polyurethan gebildet sein. Sowohl die Ausgleichsschicht als auch die Barriereschicht liegt mit einem Flächengewicht von 1 g/m² vor.

Die so beschichtete Deckfolie 2 ist sodann über eine Kaschierschicht 6 aus einem Polyurethan-Klebstoff mit einer Trägerfolie 7 verbunden, welche an den Verpackungsinnenraum der Folienverpackung 1 angrenzt. Bei der Trägerfolie 7 handelt es sich um eine dreischichtig koextrudierte Folie aus einem Polyethylen, wobei sich die einzelnen Schichten 7a, 7b, 7c sowohl hinsichtlich des verwendeten Polyethylens als auch hinsichtlich der Schichtdicke voneinander unterscheiden. In diesem Zusammenhang sei darauf hingewiesen, dass die Zeichnung lediglich einen schematischen Aufbau darstellt und die einzelnen Schichtdicken und Materialien der zuvor gezeigten Tabelle entnommen werden können. Insbesondere ist die unmittelbar an den Verpackungsinnenraum angrenzende Schicht 7c aus einer niedrigsiegelnden Schicht gebildet, sodass die Folienverpackung 1 in einfacher Art durch eine Heißsiegelnaht verschlossen werden kann.

Anhand der zuvor gezeigten Tabelle kann auch entnommen werden, dass das Flächengewicht der gesamten Folienverpackung bei 163,5 g/m² liegt. Hierbei sind sowohl die Deckfolie 2 als auch die Trägerfolie 7 aus einem Polyethylen (PE) gebildet und somit in einfacher Art und Weise zusammen recycelbar. Davon abweichend stellen die Bedruckung 3, die Ausgleichsschicht 4, die Barriereschicht 5 und auch die Kaschierschicht 6 Schichten dar, welche aus einem Fremdpolymer gebildet sind, wobei der Anteil der Fremdpolymere in Bezug auf den gesamten Folienverbund bei ca. 3,6 % liegt.

Je nach verwendeter Recycling-Technologie kann die PVOH- Barriereschicht 5 von dem Folienverbund herausgelöst werden, sodass die Recyclierbarkeit weiter erhöht wird.

In der nachfolgenden Tabelle ist ein Vergleichsbeispiel gezeigt, welches anstelle von Polyvinylalkohol Ethylen-Vinylalkohol-Copolymer (EVOH) als Barriereschicht 5 verwendet. Derartige Schichten aus EVOH werden üblicherweise in Form einer Koextrusionsfolie eingebunden, wobei die Koextrusionsfolie anschließend über eine Kaschierschicht 6 mit einer bedruckten Deckfolie 2 verbunden wird. Um eine Koextrusion der Ethylen-Vinylalkohol-Copolymer-Schicht zu ermöglichen, sind darüber hinaus Haftvermittlerschichten vorgesehen, durch die der Fremdpolymeranteil weiter erhöht wird. Insgesamt liegt dieser gemäß dem gezeigten Beispiel bei 11 % und damit deutlich höher als dies gemäß der vorliegenden Erfindung der Fall ist. Hinzu kommt, dass die Schicht aus EVOH durch die Koextrusion nur schwer von den übrigen Schichten gelöst werden kann. Dies gilt gleichermaßen auch für die Haftvermittler-Schichten, sodass sich durch die Verwendung von Polyvinylalkohol gemäß der vorliegenden Erfindung ein deutlicher Vorteil hinsichtlich der Recyclierbarkeit ergibt.

| Schicht | Schichtdicke (Flächengewicht) | Zusammensetzung |
|---|---|---|
| Deckfolie (2) | 30 µm (28,5 g/m²) | HDPE |
| Bedruckung (3) | (2,0 g/m²) | Nitrocelluloselack |
| Weiß-Hinterlegung | (1,0 g/m²) | Zweikomponenten-PU-Lack + TiO₂-Partikeln |
| Kaschierschicht (6) | (2,0 g/m²) | PU-Klebstoff |
| Trägerfolie (7) | 140 µm (130,5 g/m²) | 60 µm LDPE/LLDPE/MDPE) |
| | | 5µm Haftvermittler |
| | | 5µm EVOH |
| | | 5µm Haftvermittler |
| | | 65 µm LDPE/LLDPE/VLDPE) |
| | Gesamt: 164,0 g/m² | |

## Patentansprüche

1. Folienverbund für Folienverpackungen (1) mit einer Deckfolie (2) aus einem Polyolefin und einer Barriereschicht (5), wobei die Deckfolie (2) auf einer der Barriereschicht (5) zugewandten Seite zumindest teilweise eine Bedruckung (3) aufweist,
**dadurch gekennzeichnet, dass**
eine Ausgleichsschicht (4) zwischen der Deckfolie (2) und der Barriereschicht (5) angeordnet ist, welche zumindest teilweise an die Bedruckung (3) angrenzt, wobei die Ausgleichsschicht (4) aus einem ausgehärteten Material auf Basis von Polyurethan gebildet ist.

2. Folienverbund nach Anspruch 1, **dadurch gekennzeichnet, dass** die Barriereschicht (5) auf Basis von Polyurethan gebildet ist.

3. Folienverbund nach Anspruch 1 oder 2, **dadurch gekennzeichnet, dass** die Barriereschicht (5) unmittelbar oder unter Einbindung einer Haftvermittlerschicht an die Ausgleichsschicht (4) anschließt.

4. Folienverbund nach einem der Ansprüche 1 bis 3, **dadurch gekennzeichnet, dass** das ausgehärtete Material ein Polyurethanlack, bevorzugt ein Zwei-Komponenten-Polyurethanlack, ist.

5. Folienverbund nach einem der Ansprüche 1 bis 4, **dadurch gekennzeichnet, dass** der Anteil von Polyolefin bezogen auf den gesamten Folienverbund mehr als 90 Gew.-% beträgt.

6. Folienverbund nach einem der Ansprüche 1 bis 5, **dadurch gekennzeichnet, dass** Feststoffpartikel in der Ausgleichsschicht (4) angeordnet sind.

7. Folienverbund nach Anspruch 6, **dadurch gekennzeichnet, dass** der Anteil der Feststoffpartikel in der Ausgleichsschicht (4) zwischen 5 und 50 Vol.-% beträgt.

8. Folienverbund nach Anspruch 6 oder 7, **dadurch gekennzeichnet, dass** die Feststoffpartikel einen mittleren Durchmesser zwischen 150 und 800 nm aufweisen.

9. Folienverbund nach einem der Ansprüche 6 bis 8, **dadurch gekennzeichnet, dass** die Feststoffpartikel zumindest teilweise Titandioxidpartikel sind.

10. Folienverbund nach einem der Ansprüche 1 bis 9, **dadurch gekennzeichnet, dass** sich die Bedruckung (3) nicht vollflächig auf der Deckfolie (2) erstreckt und wobei die Ausgleichsschicht (4) die Bedruckung (3) derart einschließt, dass die Ausgleichsschicht (4) auf der an die Barriereschicht (5) angrenzenden Seite eine im Wesentlichen ebene Fläche bildet.

11. Folienverbund nach einem der Ansprüche 1 bis 10, **dadurch gekennzeichnet, dass** die Barriereschicht (5) eine Dicke zwischen 0,5 g/m² und 2,5 g/m², bevorzugt zwischen 0,7 µm und 1,5 µm, aufweist.

12. Folienverbund nach einem der Ansprüche 1 bis 11, **dadurch gekennzeichnet, dass** die Ausgleichsschicht (4) eine Dicke zwischen 0,5 g/m² und 2,5 g/m², bevorzugt zwischen 0,7 g/m² und 1,5 g/m², aufweist.

13. Folienverbund nach einem der Ansprüche 1 bis 12, **dadurch gekennzeichnet, dass** die Barriereschicht (5) einen Anteil von Polyethylenimin (PEI) aufweist.

14. Folienverbund nach Anspruch 13, **dadurch gekennzeichnet, dass** der Anteil an Polyethylenimin in der Barriereschicht (5) zwischen 0,5 und 1,5 Gew. beträgt.

15. Folienverbund nach einem der Ansprüche 1 bis 14, **dadurch gekennzeichnet, dass** die Deckfolie (2) aus einem Polyethylen gebildet ist.

16. Folienverbund nach einem der Ansprüche 1 bis 15, **dadurch gekennzeichnet, dass** die Deckfolie (2) über eine Kaschierschicht (6) mit einer Trägerfolie (7), insbesondere mit einer mehrschichtigen Trägerfolie (7), verbunden ist.

17. Folienverbund nach Anspruch 16, **dadurch gekennzeichnet, dass** die Kaschierschicht (6) unmittelbar an die Barriereschicht (5) angrenzt.

18. Folienverbund nach Anspruch 17, **dadurch gekennzeichnet, dass** die Trägerfolie (6) aus einem Polyolefin, insbesondere aus einem Polyethylen, gebildet ist.

19. Folienverpackung (1) aus einem Folienverbund nach einem der Ansprüche 1 bis 17, wobei der Folienverbund einen Verpackungsinnenraum derart begrenzt, dass die Deckfolie (2) eine Außenseite bildet.

20. Verfahren zur Herstellung eines Folienverbundes nach einem der Ansprüche 1 bis 18,
- wobei eine Deckfolie (2) bereitgestellt wird,
- wobei die Deckfolie (2) anschließend zumindest teilweise bedruckt wird,
- wobei die Deckfolie (2) zur Bildung einer Ausgleichsschicht (4) auf der zumindest teilweise bedruckten Seite mit einem aushärtbaren Material beschichtet wird, welches zumindest einen Anteil an Polyurethan aufweist,
- wobei nach dem Aushärten die Ausgleichsschicht (4) mit einem Material zur Bildung einer Barriereschicht (5) mit einem Material beschichtet wird.

21. Verfahren nach Anspruch 20, wobei das Material zur Bildung der Barriereschicht (5) aus einem flüssigen Lösemittel und einem Anteil an Polyvinylalkohol in Feststoffform gebildet ist.

22. Verfahren nach Anspruch 20 oder 21, wobei das aushärtbare Material der Ausgleichsschicht (4) nach dem Aufbringen geglättet wird.

23. Verfahren nach einem der Ansprüche 20 bis 22, wobei die Deckfolie (2) unter Einbindung einer Kaschierschicht (6) mit einer Trägerfolie (7) verbunden wird.
